# EUROPEAN PATENT SPECIFICATION

(11) **EP 4 593 760 B1**
(45) Date of publication and mention of the grant of the patent: **03.12.2025**
(21) Application number: 23777235.5
(22) Date of filing: 26.09.2023
(51) Int. Cl.: A61C 17/02, A61C 17/028, A61C 17/36

(54) **HEAD COMPONENT FOR AN ORAL HYGIENE PRODUCT**
KOPFKOMPONENTE FÜR EIN MUNDPFLEGEPRODUKT
COMPOSANT DE TÊTE POUR PRODUIT D'HYGIÈNE BUCCALE

(30) Priority: 29.09.2022 EP 22198758
(43) Date of publication of application: 06.08.2025
(73) Proprietor: Koninklijke Philips N.V., 5656 AG Eindhoven (NL)
(72) Inventor: GOTTENBOS, Bart, 5656 AG Eindhoven (NL); GERHARDT, Lutz Christian, 5656 AG Eindhoven (NL); WILLIAMS, Quintin Oliver, 5656AG Eindhoven (NL)
(74) Representative: Philips Intellectual Property & Standards
(86) International application number: PCT/EP2023/076439
(87) International publication number: WO 2024/068568

(56) References cited:
- EP-A1- 3 797 736
- EP-A1- 3 797 736
- JP-U- S53 123 893
- JP-U- S53 123 893
- JP-U- S53 129 200
- JP-U- S53 129 200
- US-A1- 2004 072 122
- US-A1- 2004 072 122

## Description

### FIELD OF THE INVENTION

The present invention relates to the field of oral hygiene products, and more particularly to a head component for an oral hygiene product, such as an oral irrigator or toothbrush.

### BACKGROUND OF THE INVENTION

Many oral hygiene products employ fluid flossing functionalities for cleaning interdental spaces between the teeth of a user. Known examples include manual and powered toothbrushes, which include tufts of bristles attached to a platen of a brush head and a nozzle projecting from the brush head for emitting a jet of cleaning fluid to the teeth of user. Such brush-jet combinations have the advantage that cleaning is less dependent on the technique of the user.

However, in oral irrigators and/or brush-jet combination toothbrushes, the jet of cleaning fluid is typically limited to a narrow line of cleaning, especially when the jet of cleaning fluid is chosen to be small to limit total fluid use. For interdental cleaning, such a narrow cleaning line reduces efficacy when compared to convention string flossing (because the small jet of cleaning fluids only cleans a middle part of the user's teeth, and not tooth contact points and/or subgingivally where string floss can reach).

Also, the liquid-based cleaning jet typically only reaches the true interproximal tooth surfaces at shallow impact angles (e.g. 0-15°), and this reduces cleaning efficacy.

EP3797736A1 discloses a nozzle unit which comprises at least one nozzle orifice. The nozzle unit is designed to be used as part of an oral irrigator and is configured to realize a predetermined orientation of a flow of irrigation fluid with respect to a subject's respective teeth and periodontal pockets when placed with the at least one nozzle orifice in the vicinity of the subject's respective teeth at the position of interdental interfaces.

JPS53129200U discloses two nozzle outlets facing each other.

US 2004/072122 A1 discloses an oral hygiene device having, in one embodiment, a unique, peristaltic pump water streaming or jet action; and in another embodiment, a multi-headed toothbrush may also be disposed on the end of a handle on which the jet nozzle or nozzles are disposed.

JPS53123893U discloses an actuator configured to move the first nozzle.

### SUMMARY OF THE INVENTION

The invention is defined by the claims.

According to examples in accordance with an aspect of the invention, there is provided a head component for an oral hygiene product for cleaning teeth by emitting a cleaning fluid, wherein the head component comprises:
a support surface; and
a first nozzle coupled to the support surface, the first nozzle being configured, in use, to emit a burst of cleaning fluid to the teeth of user via a first fluid outlet located at the end of the first nozzle,
wherein the first nozzle is configured to be moveable by emitting the burst of cleaning fluid to rotate the first fluid outlet from a first resting position to a first cleaning position,
wherein, in the first resting position, the first fluid outlet is oriented to emit cleaning fluid along a first axis,
and wherein, in the first cleaning position, the first fluid outlet is oriented to emit cleaning fluid along a second axis that is angled relative to the first axis.

Proposed are schemes, solutions, concepts, designs, methods and systems pertaining to aiding and/or improving a head for an oral hygiene product for cleaning teeth by emitting a cleaning fluid.

In particular, it is proposed to adapt a nozzle (of a head for an oral hygiene product) so that it moves during the jetting of cleaning fluid, thus emitting the cleaning fluid in more than a single direction (e.g. across a range of differing directions). For instance, movement of the nozzle caused by emitting the cleaning fluid may cause the jet of cleaning fluid to be directed up and down (i.e. in a planar fashion), covering a full interdental space from tooth crown top to down in the subgingival area (even to root surface if exposed). That is, a jetting angle of the nozzle may be increased (i.e. widened or spread) by movement of the nozzle caused by emitting a burst of cleaning fluid from the nozzle.

For instance, a curve of the nozzle may be configured to change during a jet pulse of cleaning fluid so as to move the fluid outlet of the nozzle through a range of jetting angles. Such a change may be affected by actuators, but may alternatively result from elastic properties of the nozzle. For instance, the nozzle may be formed in such a way that a jet pulse of cleaning fluid emitted via the nozzle induces a shape change in the nozzle (thus causing movement of the fluid outlet of the nozzle).

Movement of the nozzle induced by emitting a burst of cleaning fluid may be rotational, thus creating a scanning jet having an increased cleaning footprint (even if small diameter fluid outlets/jets are used to reduce flow rates).

Put another way, it is proposed that a nozzle for emitting cleaning fluid may be configured to move during emission of a burst of cleaning fluid from the nozzle, thus resulting in the jet of cleaning fluid extending across a range of angles (e.g. potentially covering a full interdental space). Such movement may be passively created/caused (i.e. not actively caused by an actuating element configured to move the nozzle, but rather caused by force applied to the nozzle by the burst of cleaning fluid). In other embodiments, the movement may be actively created/caused (i.e. caused or assisted by an actuator component that is configured to move the nozzle during emission of cleaning fluid via the nozzle). Either way, it is proposed that movement of the nozzle during emission of a burst of cleaning fluid may increase the width of the jet cleaning line, thereby cleaning a larger amount of an interdental space during use.

Proposed embodiments may therefore provide the benefit of increasing a fluid cleaning footprint, which potentially covers the full interproximal surfaces with jet flossing. Embodiments may also provide for steep (i.e. high angle) fluid impact of the true interproximal surfaces with sheets or droplets of fluid to improve or maximize cleaning efficacy.

In some embodiments, the rotation of the first fluid outlet from the first resting position to the first cleaning position may be around a rotation axis that is substantially perpendicular to the first axis and second axis. In this way, the cleaning fluid may be emitted a planar fashion, rather than in a single direction. That is, a planar spread of cleaning fluid may be emitted by embodiments during use.

In an embodiment, the first nozzle may comprise a flexible section that is configured to deform due to a pressure applied to the first nozzle by emitting the burst of cleaning fluid. Movement of the nozzle may thus be caused by relatively simple manipulation of the nozzle's thickness, shape and size along its longitudinal length. Movement of the nozzle may thus be accurately controlled and predicted through intentional design of it shape and flexibility. For instance, the flexible section may be configured to have at least one of a thickness and elasticity that varies along the longitudinal length of the flexible section. Such variation may permit accurate design and control of nozzle movement.

The first nozzle may be coupled to the support surface via a joint that is configured to permit rotational movement of the first nozzle relative to the support surface, said rotational movement being affected by emitting the burst of cleaning fluid. In this way, relatively simple and/or cheap mechanical arrangement may be employed to define and control movement of the nozzle during the emission of the cleaning fluid.

Some embodiments may employ a biasing arrangement configured to bias the first fluid outlet to the first resting position so that the first fluid outlet is moved to the first resting position when the first nozzle is not emitting the burst of cleaning fluid. In this way, the fluid outlet may be automatically returned to its resting position.

Embodiments may further comprise: a second nozzle coupled to the support surface, the second nozzle being configured, in use, to emit a burst of cleaning fluid to the teeth of user via a second fluid outlet located at the end of the second nozzle, wherein the second nozzle is configured to be moveable by emitting the burst of cleaning fluid to rotate the fluid outlet from a second resting position to a second cleaning position, wherein, in the second resting position, the second fluid outlet is oriented to emit cleaning fluid along a third axis, and wherein, in the second cleaning position, the second fluid outlet is oriented to emit cleaning fluid along a fourth axis that is angled relative to the third axis. Such embodiments may thus provide for dual or multi nozzle arrangements that can clean both sides of a user's teeth during use.

Further, the first nozzle and second nozzle may be arranged on opposite sides of a central axis of the head component, respectively. Then in the first cleaning position, the first fluid outlet may be oriented to emit cleaning fluid along the second axis towards the opposite side of the head component from the nozzle. Also, in the second cleaning position, the second fluid outlet may be oriented to emit cleaning fluid along the fourth axis towards the opposite side of the head component from second nozzle. Furthermore, the second and fourth axes may be configured to intersect so that, in use, cleaning fluid emitted from the first fluid outlet and the second fluid outlet collides. For example, two jets of cleaning fluid may be configured to collide in an interdental space, such that a sheet is formed which is incident on the interdental surfaces at a steep angle and across a larger area.

Also, the first nozzle and second nozzle may be arranged in U- or C- shaped configuration so that, in use, the first nozzle and second nozzle are adapted to be positioned on either side of a user's tooth. In this way, two opposing fluid outlets (i.e. orifices) may be provided in such way that the two jets collide occasionally (e.g. when meeting in the middle of the interproximal space). This can redirect the cleaning fluid, creating a sheet of fluid with a direction towards the proximal tooth surfaces, thereby hitting the interproximal surfaces at a steep angle to improve cleaning.

Some embodiments may also comprise a sensor configured to detect an interdental space based at least one of: a distance between the first and second nozzles during use; and a deformation of a least one of the first nozzle and the second nozzle; and a force applied to at least one of the first nozzle and the second nozzle. For instance, two opposing clamping nozzles may be employed as (or in conjunction with) a sensor to detect the interdental space and limit the liquid volume use (e.g. by controlling cleaning fluid emission so that it only shoots interdentally).

An embodiment may further comprise an actuator configured to move the first nozzle responsive to emitting the burst of cleaning fluid being emitted.

Some embodiments may further comprise one or more bristle tufts extending from the support surface. Embodiments may therefore be employed in conjunction with oral brushing products, such as an electric toothbrush. By being implemented in conjunction with bristle tufts, embodiments may help to reduce a reliance on brushing orientation and/or angle for optimal cleaning performance.

It will therefore be understood that the proposed concept(s) is/are not limited to oral irrigators, but may instead be employed in a wide range of oral hygiene products.

According to yet another aspect of the invention, there is provided an oral hygiene product comprising a head component according to a proposed embodiment. For example, the oral hygiene product may comprise an electric toothbrush or an oral irrigator.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified schematic block diagram of an oral irrigator according to a proposed embodiment (viewed from the side);
Fig. 2 shows the head of the oral irrigator of Fig. 1 (viewed from above, i.e. a top view) wherein exemplary movement of the nozzle is depicted;
Fig. 3 is a simplified schematic block diagram of an electric toothbrush according to a proposed embodiment (viewed from the side);
Fig. 4 shows the head of the electric toothbrush of Fig. 3 (viewed from above, i.e. a top view), wherein exemplary movement of the nozzles is depicted;
Fig. 5 shows a modified version of the head component of Fig. 4 wherein exemplary movement of the nozzles is depicted; and

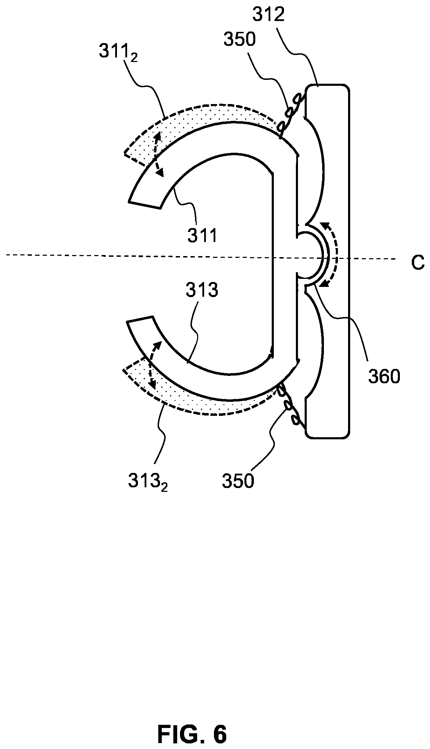

Fig. 6 is a simplified schematic block diagram of a head of an oral irrigator according to another proposed embodiment, wherein exemplary movement of the nozzles is depicted.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

Implementations in accordance with the present disclosure relate to various arrangements, adaptations, and/or configurations of a head for an oral hygiene product pertaining to improving cleaning performance. According to proposed concepts, a number of possible solutions may be implemented separately or jointly. That is, although these possible solutions may be described below separately, two or more of these possible solutions may be implemented in one combination or another.

The invention proposes concepts for aiding and/or improving cleaning from an oral hygiene product for cleaning teeth by emitting a cleaning fluid. In particular, embodiments may provide a system, device and/or method which provides a nozzle that moves during the emitting/jetting of cleaning fluid from the nozzle. Such movement of the nozzle may result in a larger cleaning area being covered by the emitted jet of cleaning fluid, thus improving teeth and/or interdental cleaning during use. Put another way, it is proposed that movement of the nozzle during emission of a burst of cleaning fluid may increase the width of the jet cleaning line, thereby cleaning a larger amount of an interdental space during use.

Embodiments propose that a nozzle for emitting cleaning fluid may be configured to move during emission of a burst of cleaning fluid from the nozzle, thus resulting in the jet of cleaning fluid extending across a range of angles (e.g. potentially covering a full interdental space). Such movement of the nozzle may be passively created/caused (i.e. not actively caused by an actuating element configured to move the nozzle, but rather caused by force applied to the nozzle by the burst of cleaning fluid). Alternatively, the movement may be cause or assisted by an actuator component that is configured to move the nozzle during emission of cleaning fluid via the nozzle.

By way of further example, embodiments may be configured to create and up-down scanning jet of cleaning fluid due to a nozzle that changes shape when emitting the cleaning fluid. This may increase the cleaning footprint of the emitted fluid, even when small diameter jets are used to reduce flow rates. Also, embodiments may be configured to have two (or more) jets of cleaning fluid collide, preferably in an interdental space during use, such that a sheet of fluid is formed and hits the interdental surfaces at a steep angle and across a larger area. Yet further, embodiments may employ two opposing clamping nozzles as a sensor to detect interdental space and limit the liquid volume use (by only shooting interdentally for example).

The proposed concepts may, for example, be applied to oral irrigators, electric toothbrushes and mouthpiece-style toothbrushes. In other words, proposed concepts may be incorporated into a wide range of oral hygiene devices to provide improved cleaning of teeth by emitting a cleaning fluid. Proposed embodiments may therefore improve cleaning performance by providing a nozzle that it moves during the jetting of cleaning fluid.

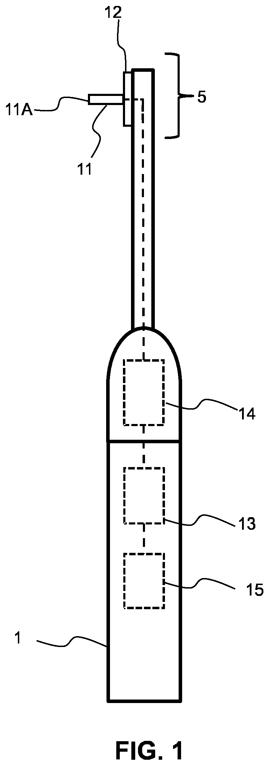

Referring to Fig. 1, there is shown a simplified schematic block diagram of an oral irrigator 1 according to a proposed embodiment. In the Fig. 1, the oral irrigator 1 is shown from the side, i.e. Fig. 1 is a side view of the oral irrigator.

The oral irrigator 1 comprises a head component 5 having a support surface 12 supporting (i.e. coupled to) a nozzle 11. The nozzle 11 is configured, in use, to emit a burst of cleaning fluid to the teeth of user via a fluid outlet 11A located at the end of the nozzle 11.

The oral irrigator 1 also comprises fluid pumping means 13 (specifically, a motor) that is adapted, in use, to pump cleaning fluid from a fluid reservoir 14 to the nozzle 11 for emission. Other fluid pumping means 13 will be appreciated by the skilled person.

The oral irrigator 1 also comprises a processing arrangement 15 (i.e. a control unit 15) configured to control the fluid pumping means 13. The processor 15 may be provided within the device 1, or external to the device 1. When external to the device 1 (i.e. in a smartphone) there may also be a communication unit (not shown) capable of transmitting control signals/instructions to the processor 15.

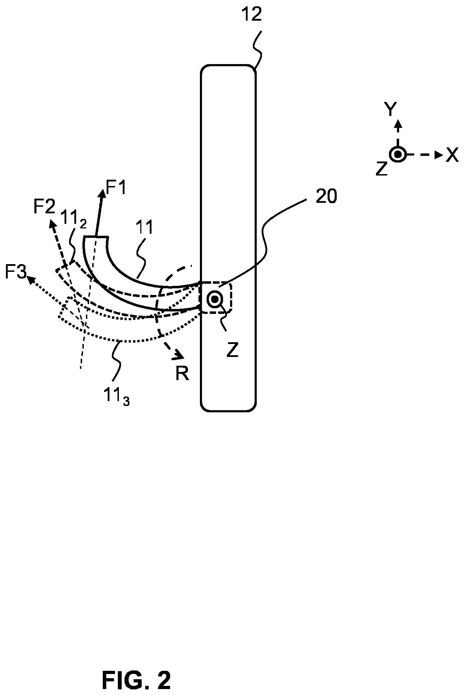

Referring now to Fig. 2, the head component 5 of Fig. 1 is shown in more detail. More specifically, Fig. 2 shows the head component 5 of the oral irrigator of Fig. 1 when viewed from above (i.e. a top view). Exemplary movement of the nozzle 11 is depicted by dashed and dotted line reproductions of the nozzle 11.

The nozzle 11 is adapted to be moveable by emitting a burst of cleaning fluid so as to rotate the fluid outlet 11A from a resting position to a plurality of different cleaning positions 11₂ and 11₃.

In the resting position, the fluid outlet is oriented to emit cleaning fluid along a first axis F1. In the first cleaning position 11₂, the fluid outlet is oriented to emit cleaning fluid along a second axis F2 that is angled relative to the first axis F1. In the second cleaning position 11₃, the fluid outlet is oriented to emit cleaning fluid along a third axis F3 that is angled relative to the first axis F1 and the second axis F3. It is to be understood, however, the second and third cleaning positions are only exemplary, and that there may be a continuous range of cleaning positions between the resting position and the second cleaning position 11₃. That is, although only two cleaning positions of the nozzle are depicted in Fig. 2, the nozzle 11 may be adapted to move through a continuous range of positions, thus emitting an arc-like continuous range of fluid jets.

Specifically, said rotation of the fluid outlet from the resting position to the cleaning positions 11₂ and 11₃ is around a rotation axis Z that is substantially perpendicular to the first F1, second F2 and third F3 axes (that lie in the X-Y plane).

To affect the above-described movement of the nozzle 11, the nozzle 11 comprises a flexible section 20 that is configured to deform due to a pressure applied to the nozzle by emitting the burst of cleaning fluid through the nozzle. Here, the flexible section 20 is configured to have at least one of a thickness and elasticity that differs from the remainder of the nozzle 11. That is, movement of the nozzle 11 is caused by relatively simple manipulation of the nozzle's thickness, shape and size in one or more sections of the nozzle 11. In this way, the movement of the nozzle 11 may be accurately controlled and predicted through intentional design of it shape and flexibility. For instance, the flexible section may be configured to have at least one of a thickness and elasticity that varies along the longitudinal length of the flexible section. Such variation may permit accurate design and control of nozzle movement. Put another way, the nozzle angulation and/or position may change due to its configured flexibility, responsive to the ejecting jet pulses of cleaning fluid. The movement may be designed by choosing materials with the required elastic properties, thickness and/or shape.

On each jet pulse of cleaning fluid, the flexible nozzle 11 moves as described above to create a vertical cleaning line (rather than a small round spot). In this way, the nozzle 11 is configured in such a way that it moves during the emission of cleaning fluid, so as to direct the jet of cleaning fluid reciprocally up and down, potentially covering a full interdental space from tooth crown top to down in the subgingival area (and even to root surface if exposed).

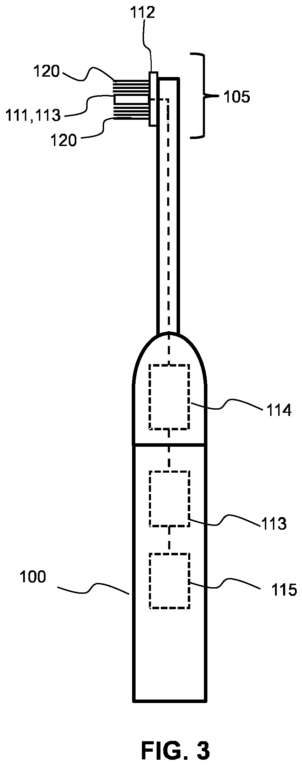

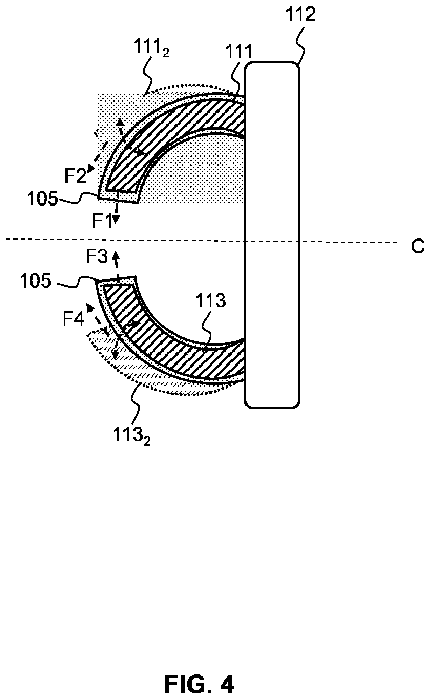

Referring now to Figs. 3 and 4, there is shown a simplified schematic block diagram of an electric toothbrush 100 according to another proposed embodiment. In the Fig. 3, the electric toothbrush 100 is shown from the side, i.e. Fig. 3 is a side view of the electric toothbrush. Fig. 4 shows the head of the electric toothbrush of Fig. 3 (viewed from above, i.e. a top view), wherein exemplary movement of the nozzles is depicted.

The electric toothbrush 100 comprises a head component 105 having a support surface 112 (e.g. platen) supporting (i.e. coupled to) first 111 and second 113 nozzles and tufts of bristles (i.e. bristle tufts) 120 attached to the support surface (e.g. platen). Here, the first 111 and second 113 nozzles are curved and arranged in U- or C- shaped configuration so that, in use, the first nozzle 111 and second nozzle 113 are adapted to be positioned on either side of a user's tooth.

A bristle is a single filament, typically nylon, which is used to clean oral surfaces. Thus, a bristle tuft is a bundle of closely-packed filaments where one end of each bristle is attached to the support surface 112 of the head component 105, and the other end of each bristle is free and used for cleaning of an oral surface (through brushing the oral surface with the bristle(s)).

The electric toothbrush 100 also comprises fluid pumping means 113 adapted, in use, to pump cleaning fluid from a fluid reservoir 114 to the nozzles 111, 113 for emission as jets of fluid. Other fluid pumping means 113 will be appreciated by the skilled person.

The toothbrush 100 also comprises a processing arrangement 115 (i.e. a control unit 15) configured to control the fluid pumping means 113. The processor 115 may be provided within the device 100, or external to the device 100. When external to the device 100 (i.e. in a smartphone) there may also be a communication unit (not shown) capable of transmitting control signals/instructions to the processor 115.

Referring in particular to Fig. 4, the first 111 and second 113 nozzles are arranged on opposite sides of a central axis C of the head component 105.

The first nozzle 111 is configured, in use, to emit a burst of cleaning fluid to the teeth of user via a first fluid outlet located at the end of the first nozzle 111. Further, the first nozzle 111 is configured to be moveable by emitting the burst of cleaning fluid to rotate its fluid outlet from a first resting position 111 to a first cleaning position 111₂.

Similarly, the second nozzle 113 is configured, in use, to emit a burst of cleaning fluid to the teeth of user via a second fluid outlet located at the end of the second nozzle 113. Further, the second nozzle 113 is configured to be moveable by emitting the burst of cleaning fluid to rotate the second fluid outlet from a second resting position 113 to a second cleaning position 113₂.

In the first resting position, the first fluid outlet is oriented to emit cleaning fluid along a first axis F1 axis towards the opposite side of the head component from the first nozzle 111. In the first cleaning position, the first fluid outlet is oriented to emit cleaning fluid along a second axis F2 (that is angled relative to the first axis F1) towards the opposite side of the head component from the first nozzle 111.

In the second resting position, the second fluid outlet is oriented to emit cleaning fluid along a third axis F3 towards the opposite side of the head component from the second nozzle 113. In the second cleaning position, the second fluid outlet is oriented to emit cleaning fluid along a fourth axis F4 (that is angled relative to the third axis) towards the opposite side of the head component from the second nozzle 113.

Here, it is noted that the first and third axes are configured to intersect so that, in use, cleaning fluid emitted from the first fluid outlet and the second fluid outlet (in their respective rest positions) collides. Similarly, the second and fourth axes are configured to intersect so that, in use, cleaning fluid emitted from the first fluid outlet and the second fluid outlet collides.

The two opposing nozzles are thus arranged in such that the two jets collide occasionally when meeting in the middle of the interproximal space. This redirects the cleaning fluid to form a sheet with a direction towards the proximal tooth surfaces, hitting the interproximal surfaces at a steep angle to maximize cleaning.

The nozzles can be in a rigid setting to always align against each other. The nozzles may be configured to create an up and down jet scanning line. If fluidic paths of both nozzles are mirrored, the nozzle up-down movements may be synchronized and the two fluid jets may meet at a predefined point, preferably when the nozzles are positioned at an interdental space position during use.

Purely by way of example, the fluid jet sizes may be chosen to be relatively small, so for example 0.5 mm down to 0.2 mm in diameter. Since the interdental spaces in diseased state are a lot wider than such fluid jet sizes, the two jets have a large chance to meet and create the redirected sheet towards the interproximal surfaces.

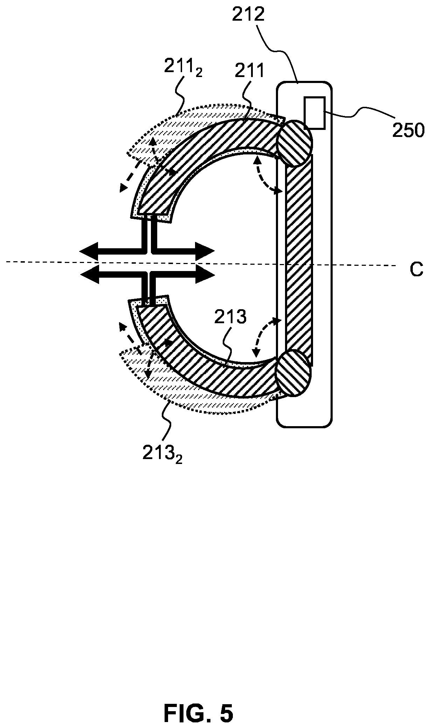

The proposed concept of arranging the emitted fluid jets to collide is illustrated further in Fig. 5.

Fig. 5 shows a modified version of the head component of Fig. 4, wherein exemplary movement of the nozzles is depicted along with the direction of intersecting/colliding fluid jets.

The support surface 212 (e.g. platen) supports first 211 and second 213 nozzles. Here, the first 211 and second 213 nozzles are curved and arranged in U- or C- shaped configuration so that, in use, the first nozzle 211 and second nozzle 213 are adapted to be positioned on either side of a user's tooth. The first 211 and second 213 nozzles are arranged on opposite sides of a central axis C of the head component.

The first nozzle 211 is configured, in use, to emit a burst of cleaning fluid to the teeth of user via a first fluid outlet located at the end of the first nozzle 211. Further, the first nozzle 211 is configured to be moveable by emitting the burst of cleaning fluid to rotate its fluid outlet from a first resting position 211 to a first cleaning position 211₂.

Similarly, the second nozzle 213 is configured, in use, to emit a burst of cleaning fluid to the teeth of user via a second fluid outlet located at the end of the second nozzle 213. Further, the second nozzle 213 is configured to be moveable by emitting the burst of cleaning fluid to rotate the second fluid outlet from a second resting position 213 to a second cleaning position 213₂.

As depicted by the bold black arrows in Fig. 5, the fluid jets emitted by the first 211 and second 213 nozzles are arranged to collide at a position along the central axis C (which may coincide with an interdental space during use. The collision of the fluid jets redirects the fluids (as depicted by the bold black arrows) so as to create a sheet of fluid is formed and hits the interdental surfaces at a steep angle and across a larger area.

Yet further, the embodiment of Fig. 5 comprises a sensor 250 that is configured to detect an interdental space based at least one of: a distance between the first 211 and second 213 nozzles during use; a deformation of a least one of the first nozzle 211 and the second nozzle 213; and a force applied to at least one of the first nozzle 211 and the second nozzle 213. The sensor 250 is adapted to communicate a detected interdental space to a processing unit of the oral hygiene product (which may then use the detected interdental space to control emission of cleaning fluid via control of the pumping means, e.g. to coincide with interdental locations).

Various types of sensor systems may be used to measure distance between the tubes or orifices, such as optical or electrical sensors. For sensing deformation for example, strain gages are very commonly used, easily measuring the change in bending curvature of the nozzle tubes. An alternative (or complimentary) approach may comprise measuring the fluid pressure in the irrigator channel (for embodiments where the fluid pressure drives the nozzle motion). If the nozzles are free, e.g. not forced in a certain bending position by the teeth, there will be a certain pressure profile associated with the normal free nozzle motion. If the nozzles are deformed on the teeth, this pressure profile will be altered. **In** the interproximal space, such deformation will be minimal, or even the nozzles are completely free, so the pressure profile will resemble the free pattern more or fully.

Alternatively, clamping force of the arms may be measured using force sensors, since force will increase on the outside of the teeth, and decrease at interdental spaces.

Fig. 5 shows yet another embodiment of a head component.

The support surface 312 (e.g. platen) supports first 311 and second 313 nozzles. Here, the first 311 and second 313 nozzles are arranged in U- or C- shaped configuration so that, in use, the first nozzle 311 and second nozzle 313 are adapted to be positioned on either side of a user's tooth. The first 311 and second 313 nozzles are arranged on opposite sides of a central axis C of the head component.

The first nozzle 311 is configured, in use, to emit a burst of cleaning fluid to the teeth of user via a first fluid outlet located at the end of the first nozzle 311. Further, the first nozzle 311 is configured to be moveable by emitting the burst of cleaning fluid to rotate its fluid outlet from a first resting position 311 to a first cleaning position 311₂.

Similarly, the second nozzle 313 is configured, in use, to emit a burst of cleaning fluid to the teeth of user via a second fluid outlet located at the end of the second nozzle 313. Further, the second nozzle 313 is configured to be moveable by emitting the burst of cleaning fluid to rotate the second fluid outlet from a second resting position 313 to a second cleaning position 313₂.

In this embodiment, the first 311 and second 313 nozzles are coupled to the support surface 312 via a ball joint 360 that is configured to permit rotational movement of the first 311 and second 313 nozzles relative to the support surface, said rotational movement being affected by emitting the burst of cleaning fluid. The ball joint 360 may permit more degrees of movement for the nozzles, for example.

Also, a biasing arrangement (specifically coil springs) 350 is configured to bias the first 311 and second 313 to their respective resting positions. In this way, the first and second fluid outlets are automatically moved to their respective resting positions when not emitting the burst of cleaning fluid.

Although example embodiments have been described above as employing the force from jet pulses to induce movement of the nozzle(s), alternative approaches to creating and/or assisting movement of the nozzle(s). For example, various actuator types may be employed to induce or assist nozzle movement. Additionally, or alternatively, responsive materials may be integrated in the nozzle(s) to actuate a nozzle shape change. Also, an actuator may be integrated into the handle of an oral hygiene product employing the proposed concept(s), transferring the rotations over the nozzle neck to an orifice location.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A head component (5) for an oral hygiene product for cleaning teeth by emitting a cleaning fluid, wherein the head component comprises:
- a support surface (12); and
- a first nozzle (11) coupled to the support surface, the first nozzle being configured, in use, to emit a burst of cleaning fluid to the teeth of user via a first fluid outlet (11A) located at the end of the first nozzle,
wherein the first nozzle is configured to be moveable by emitting the burst of cleaning fluid to rotate the first fluid outlet from a first resting position to a first cleaning position (11₂),
wherein, in the first resting position, the first fluid outlet is oriented to emit cleaning fluid along a first axis (F1),
and wherein, in the first cleaning position, the first fluid outlet is oriented to emit cleaning fluid along a second axis (F2) that is angled relative to the first axis
- a second nozzle (113) coupled to the support surface, the second nozzle being configured, in use, to emit a burst of cleaning fluid to the teeth of user via a second fluid outlet located at the end of the second nozzle,
wherein the second nozzle is configured to be moveable by emitting the burst of cleaning fluid to rotate the second fluid outlet from a second resting position to a second cleaning position (113₂),
wherein, in the second resting position, the second fluid outlet is oriented to emit cleaning fluid along a third axis (F3),
and wherein, in the second cleaning position, the second fluid outlet is oriented to emit cleaning fluid along a fourth axis (F4) that is angled relative to the third axis, and
wherein the first nozzle (111) and second nozzle (113) are arranged on opposite sides of a central axis of the head component, respectively,
**characterized in that**
in the first cleaning position, the first fluid outlet is oriented to emit cleaning fluid along the second axis towards the opposite side of the head component from the nozzle,
and in the second cleaning position, the second fluid outlet is oriented to emit cleaning fluid along the fourth axis towards the opposite side of the head component from second nozzle.

2. The head component of claim 1, wherein said rotation of the first fluid outlet (11A) from the first resting position to the first cleaning position is around a rotation axis (Z) that is substantially perpendicular to the first axis and second axis.

3. The head component of claim 1 or 2, wherein the first nozzle (11) comprises a flexible section (20) that is configured to deform due to a pressure applied to the first nozzle by emitting the burst of cleaning fluid.

4. The head component of claim 3, wherein the flexible section (20) is configured to have at least one of a thickness and elasticity that varies along the longitudinal length of the flexible section.

5. The head component of any of claims 1 to 4, wherein the first nozzle (11) is coupled to the support surface via a joint (360) that is configured to permit rotational movement of the first nozzle relative to the support surface, said rotational movement being affected by emitting the burst of cleaning fluid.

6. The head component of any of claims 1 to 5, comprising a biasing arrangement (350) configured to bias the first fluid outlet to the first resting position so that the first fluid outlet is moved to the first resting position when the first nozzle is not emitting the burst of cleaning fluid.

7. The head component of any of claims 1 to 6, wherein the second (F2) and fourth (F4) axes are configured to intersect so that, in use, cleaning fluid emitted from the first fluid outlet and the second fluid outlet collides.

8. The head component of any of claims 1 to 7, wherein the first nozzle (111) and second nozzle (113) are arranged in U- or C- shaped configuration so that, in use, the first nozzle and second nozzle are adapted to be positioned on either side of a user's tooth.

9. The head component of claim 1, further comprising a sensor (250) configured to detect an interdental space based at least one of: a distance between the first and second nozzles during use; and a deformation of a least one of the first nozzle and the second nozzle; and a force applied to at least one of the first nozzle and the second nozzle.

10. The head component of any of claims 1 to 9, further comprising an actuator configured to move the first nozzle responsive to emitting the burst of cleaning fluid being emitted.

11. The head component of any of claims 1 to 7, further comprising:
one or more bristle tufts (120) extending from the support surface.

12. An oral hygiene product for cleaning teeth by emitting a cleaning fluid, the oral hygiene product comprising a head component according to any of claims 1 to 10.

13. The oral hygiene product of claim 12, wherein the oral hygiene product comprises an electric toothbrush or an oral irrigator.

## Patentansprüche

1. Kopfkomponente (5) für ein Mundpflegeprodukt zum Reinigen von Zähnen durch Abgeben eines Reinigungsfluids, wobei die Kopfkomponente umfasst:
- eine Auflagefläche (12); und
- eine erste Düse (11), die mit der Auflagefläche gekoppelt ist, wobei die erste Düse dazu konfiguriert ist, bei Verwendung, über einen ersten Fluidauslass (11A), der sich am Ende der ersten Düse befindet, einen Stoß von Reinigungsfluid auf die Zähne eines Benutzers abzugeben,
wobei die erste Düse dazu konfiguriert ist, durch Abgeben des Stoßes von Reinigungsfluid beweglich zu sein, um den ersten Fluidauslass von einer ersten Ruheposition in eine erste Reinigungsposition (11₂) zu drehen,
wobei der erste Fluidauslass in der ersten Ruheposition ausgerichtet ist, um Reinigungsfluid entlang einer ersten Achse (F1) abzugeben,
und wobei der erste Fluidauslass in der ersten Reinigungsposition ausgerichtet ist, um Reinigungsfluid entlang einer zweiten Achse (F2), die relativ zur ersten Achse abgewinkelt ist, abzugeben
- eine zweite Düse (113), die mit der Auflagefläche gekoppelt ist, wobei die zweite Düse dazu konfiguriert ist, bei Verwendung, über einen zweiten Fluidauslass, der sich am Ende der zweiten Düse befindet, einen Stoß von Reinigungsfluid auf die Zähne eines Benutzers abzugeben,
wobei die zweite Düse dazu konfiguriert ist, durch Abgeben des Stoßes von Reinigungsfluid beweglich zu sein, um den zweiten Fluidauslass von einer zweiten Ruheposition in eine zweite Reinigungsposition (113₂) zu drehen,
wobei der zweite Fluidauslass in der zweiten Ruheposition ausgerichtet ist, um Reinigungsfluid entlang einer dritten Achse (F3) abzugeben,
und wobei der zweite Fluidauslass in der zweiten Reinigungsposition ausgerichtet ist, um Reinigungsfluid entlang einer vierten Achse (F4), die relativ zur dritten Achse abgewinkelt ist, abzugeben, und
wobei die erste Düse (111) und die zweite Düse (113) jeweils auf gegenüberliegenden Seiten einer Mittelachse der Kopfkomponente angeordnet sind,
**dadurch gekennzeichnet, dass**
in der ersten Reinigungsposition der erste Fluidauslass ausgerichtet ist, um Reinigungsfluid entlang der zweiten Achse in Richtung der Seite der Kopfkomponente abzugeben, die der Düse gegenüberliegt,
und in der zweiten Reinigungsposition der zweite Fluidauslass ausgerichtet ist, um Reinigungsfluid entlang der vierten Achse in Richtung der Seite der Kopfkomponente abzugeben, die der Düse gegenüberliegt.

2. Kopfkomponente nach Anspruch 1, wobei die Drehung des ersten Fluidauslasses (11A) von der ersten Ruheposition in die erste Reinigungsposition um eine Drehachse (Z) erfolgt, die im Wesentlichen senkrecht zur ersten Achse und zur zweiten Achse ist.

3. Kopfkomponente nach Anspruch 1 oder 2, wobei die erste Düse (11) einen flexiblen Abschnitt (20) umfasst, der dazu konfiguriert ist, sich aufgrund eines Drucks zu verformen, der durch Abgeben des Stoßes von Reinigungsfluid auf die erste Düse ausgeübt wird.

4. Kopfkomponente nach Anspruch 3, wobei der flexible Abschnitt (20) dazu konfiguriert ist, mindestens eines von einer Dicke und einer Elastizität, die entlang der Länge in Längsrichtung des flexiblen Abschnitts variiert, aufzuweisen.

5. Kopfkomponente nach einem der Ansprüche 1 bis 4, wobei die erste Düse (11) über ein Gelenk (360) mit der Auflagefläche gekoppelt ist, das dazu konfiguriert ist, eine Drehbewegung der ersten Düse relativ zur Auflagefläche zu ermöglichen, wobei die Drehbewegung durch Abgeben des Stoßes von Reinigungsfluid beeinflusst wird.

6. Kopfkomponente nach einem der Ansprüche 1 bis 5, umfassend eine Vorspannanordnung (350), die dazu konfiguriert ist, den ersten Fluidauslass in die erste Ruheposition vorzuspannen, sodass der erste Fluidauslass in die erste Ruheposition bewegt wird, wenn die erste Düse den Stoß von Reinigungsfluid nicht abgibt.

7. Kopfkomponente nach einem der Ansprüche 1 bis 6, wobei die zweite (F2) und die vierte (F4) Achse dazu konfiguriert sind, sich zu schneiden, sodass, bei Verwendung, aus dem ersten Fluidauslass und dem zweiten Fluidauslass abgegebenes Reinigungsfluid kollidieren.

8. Kopfkomponente nach einem der Ansprüche 1 bis 7, wobei die erste Düse (111) und die zweite Düse (113) in einer U- oder C-förmigen Konfiguration angeordnet sind, sodass, bei Verwendung, die erste Düse und die zweite Düse angepasst sind, um auf beiden Seiten eines Zahns eines Benutzers positioniert zu sein.

9. Kopfkomponente nach Anspruch 1, weiter umfassend einen Sensor (250), der dazu konfiguriert ist, einen Zahnzwischenraum zu erfassen, basierend auf mindestens einem von: einem Abstand zwischen der ersten und der zweiten Düse während Verwendung; und einer Verformung mindestens einer von der ersten Düse und der zweiten Düse; und einer Kraft, die auf mindestens eine von der ersten und der zweiten Düse ausgeübt wird.

10. Kopfkomponente nach einem der Ansprüche 1 bis 9, weiter umfassend eine Betätigungsvorrichtung, die dazu konfiguriert ist, die erste Düse als Reaktion auf das Abgeben des Stoßes von Reinigungsfluid zu bewegen.

11. Kopfkomponente nach einem der Ansprüche 1 bis 7, weiter umfassend:
ein oder mehrere Borstenbüschel (120), die sich von der Auflagefläche erstrecken.

12. Mundpflegeprodukt zum Reinigen von Zähnen durch Abgeben eines Reinigungsfluids, das Mundpflegeprodukt umfassend eine Kopfkomponente nach einem der Ansprüche 1 bis 10.

13. Mundpflegeprodukt nach Anspruch 12, wobei das Mundpflegeprodukt eine elektrische Zahnbürste oder eine Munddusche umfasst.

## Revendications

1. Composant de tête (5) pour un produit d'hygiène buccal destiné à nettoyer les dents en émettant un fluide de nettoyage, dans lequel le composant de tête comprend :
- une surface de support (12) ; et
- une première buse (11) couplée à la surface de support, la première buse étant configurée, en utilisation, pour émettre une salve de fluide de nettoyage vers les dents de l'utilisateur par l'intermédiaire d'une première sortie de fluide (11A) située à l'extrémité de la première buse,
dans lequel la première buse est configurée pour être mobile en émettant la salve de fluide de nettoyage pour faire tourner la première sortie de fluide d'une première position de repos à une première position de nettoyage (11₂),
dans lequel dans la première position de repos, la première sortie de fluide est orientée pour émettre du fluide de nettoyage le long d'un premier axe (F1),
et dans lequel dans la première position de nettoyage, la première sortie de fluide est orientée pour émettre du fluide de nettoyage le long d'un deuxième axe (F2) qui est incliné par rapport au premier axe
- une seconde buse (113) couplée à la surface de support, la seconde buse étant configurée, en utilisation, pour émettre une salve de fluide de nettoyage vers les dents de l'utilisateur par l'intermédiaire d'une seconde sortie de fluide située à l'extrémité de la seconde buse,
dans lequel la seconde buse est configurée pour être mobile en émettant la salve de fluide de nettoyage pour faire tourner la seconde sortie de fluide d'une seconde position de repos à une seconde position de nettoyage (113₂),
dans lequel dans la seconde position de repos, la seconde sortie de fluide est orientée pour émettre du fluide de nettoyage le long d'un troisième axe (F3),
et dans lequel dans la seconde position de nettoyage, la seconde sortie de fluide est orientée pour émettre du fluide de nettoyage le long d'un quatrième axe (F4) qui est incliné par rapport au troisième axe, et
dans lequel la première buse (111) et la seconde buse (113) sont disposées respectivement sur les côtés opposés d'un axe central du composant de tête,
**caractérisé en ce que**
dans la première position de nettoyage, la première sortie de fluide est orientée pour émettre du fluide de nettoyage le long du deuxième axe vers le côté opposé du composant de tête par rapport à la buse,
et dans la seconde position de nettoyage, la seconde sortie de fluide est orientée pour émettre du fluide de nettoyage le long du quatrième axe vers le côté opposé du composant de tête par rapport à la seconde buse.

2. Composant de tête selon la revendication 1, dans lequel ladite rotation de la première sortie de fluide (11A) de la première position de repos à la première position de nettoyage s'effectue autour d'un axe de rotation (Z) qui est sensiblement perpendiculaire au premier axe et au deuxième axe.

3. Composant de tête selon la revendication 1 ou 2, dans lequel la première buse (11) comprend une section flexible (20) qui est configurée pour se déformer en raison d'une pression appliquée à la première buse en émettant la salve de fluide de nettoyage.

4. Composant de tête selon la revendication 3, dans lequel la section flexible (20) est configurée pour présenter au moins une parmi une épaisseur et une élasticité qui varie sur la longueur longitudinale de la section flexible.

5. Composant de tête selon l'une quelconque des revendications 1 à 4, dans lequel la première buse (11) est couplée à la surface de support par l'intermédiaire d'une articulation (360) qui est configurée pour permettre un mouvement de rotation de la première buse par rapport à la surface de support, ledit mouvement de rotation étant affecté par l'émission de la salve de fluide de nettoyage.

6. Composant de tête selon l'une quelconque des revendications 1 à 5, comprenant un agencement d'inclinaison (350) configuré pour incliner la première sortie de fluide vers la première position de repos de sorte que la première sortie de fluide soit déplacée vers la première position de repos lorsque la première buse n'émet pas la salve de fluide de nettoyage.

7. Composant de tête selon l'une quelconque des revendications 1 à 6, dans lequel les deuxième (F2) et quatrième (F4) axes sont configurés pour se croiser de sorte qu'en utilisation, le fluide de nettoyage émis par la première sortie de fluide et la seconde sortie de fluide entre en collision.

8. Composant de tête selon l'une quelconque des revendications 1 à 7, dans lequel la première buse (111) et la seconde buse (113) sont disposées dans une configuration en forme de U ou de C de sorte qu'en utilisation, la première buse et la seconde buse soient adaptées pour être positionnées de chaque côté d'une dent d'un utilisateur.

9. Composant de tête selon la revendication 1, comprenant en outre un capteur (250) configuré pour détecter un espace interdentaire en fonction d'au moins l'un des éléments suivants : une distance entre les première et seconde buses pendant l'utilisation ; et une déformation d'au moins l'une de la première buse et de la seconde buse ; et une force appliquée à au moins l'une de la première buse et de la seconde buse.

10. Composant de tête selon l'une quelconque des revendications 1 à 9, comprenant en outre un actionneur configuré pour déplacer la première buse en réponse à l'émission de la salve de fluide de nettoyage émise.

11. Composant de tête selon l'une quelconque des revendications 1 à 7, comprenant en outre :
une ou plusieurs touffes de poils (120) s'étendant à partir de la surface de support.

12. Produit d'hygiène buccal destiné à nettoyer les dents en émettant un fluide de nettoyage, le produit d'hygiène buccal comprenant un composant de tête selon l'une quelconque des revendications 1 à 10.

13. Produit d'hygiène buccal selon la revendication 12, dans lequel le produit d'hygiène buccal comprend une brosse à dents électrique ou un irrigateur buccal.
